Europäisches Patentamt

European Patent Office

Office européen des brevets

(19)

(11) Veröffentlichungsnummer: **0 177 834 B1**

## EUROPÄISCHE PATENTSCHRIFT

(45) Veröffentlichungstag der Patentschrift: **28.08.91**

(51) Int. Cl.⁵: **G02B 5/08, B60R 1/08**

(21) Anmeldenummer: **85112109.5**

(22) Anmeldetag: **24.09.85**

(54) **Rückblickspiegel für Fahrzeuge, insbesondere Kraftfahrzeuge.**

(30) Priorität: **01.10.84 DE 3436016**

(43) Veröffentlichungstag der Anmeldung:
**16.04.86 Patentblatt 86/16**

(45) Bekanntmachung des Hinweises auf die
Patenterteilung:
**28.08.91 Patentblatt 91/35**

(84) Benannte Vertragsstaaten:
**AT BE CH DE FR GB IT LI LU NL SE**

(56) Entgegenhaltungen:
**DE-A- 936 076      DE-A- 2 032 452
DE-A- 3 005 621      DE-A- 3 205 055
DE-B- 1 036 672      DE-B- 2 449 763
US-A- 3 834 793      US-A- 3 846 152**

**PATENT ABSTRACTS OF JAPAN, Band 6, Nr.
248 (P-160)[1126], 7. Dezember 1982; & JP-
A-57 144 504**

**PATENT ABSTRACTS OF JAPAN, Band 9, Nr.
133 (P-362)[1856], 8. Juni 1985; & JP-A-60 15
604; & US-A-4 673 248**

(73) Patentinhaber: **FLACHGLAS AKTIENGESELL-
SCHAFT
Otto-Seeling-Promenade 10-14
W-8510 Fürth(DE)**

(72) Erfinder: **Groth, Rolf, Dr. Dipl.-Phys.
Holzstrasse 218
W-4630 Bochum 6(DE)**

(74) Vertreter: **Goddar, Heinz J., Dr. et al
FORRESTER & BOEHMERT Widenmayerstrasse 4/I
W-8000 München 22(DE)**

## Beschreibung

Die Erfindung betrifft einen Rückblickspiegel für Fahrzeuge, insbesondere Kraftfahrzeuge oder dergleichen, mit einem transparenten Schichtträger, vorzugsweise aus Natron-Silikatglas bestehend, und einer rückseitigen Beschichtung, welche eine auf dem transparenten Schichtträger angeordnete Interferenzschicht aus dielektrischem Material und eine daran anschließende Reflexionsschicht aus einem Metall oder einer Metallegierung aufweist.

Als rückseitige Beschichtung für Auto-Spiegel lassen sich bekanntlich Schichten der hochreflektierenden Metalle Silber und Aluminium einsetzen, wobei eine derartige rückseitige Beschichtung generell gegenüber einem vorderseitig beschichteten Rückblickspiegel den Vorteil hat, daß die Beschichtung durch die Spiegeleinfassung gegen direkte atmosphärische Einwirkung, insbesondere Verschmutzung, geschützt ist. Mittels der vorgenannten hochreflektierenden Metalle erhält man Rückspiegel mit Reflexionswerten im sichtbaren Spektralbereich von mehr als 85 %.

Aus "Selective Optical Surfaces for Solar Energy Converters", von M.M. Koltun, New York, 1961, Seite 39, ist ein Spiegel des vorstehend beschriebenen Schichtaufbaus bekannt, bei dem zur weiteren Erhöhung des Reflexionsvermögens auf über 90 % zwischen dem transparenten Schichtträger, im folgenden u.a. auch kurz als Glasträger bezeichnet, und der dort aus Aluminium bestehenden Metall-Reflexionsschicht eine reflexerhöhende, ein- oder zweilagige, dielektrische Interferenzschicht angeordnet ist.

Derartige Spiegel führen jedoch aufgrund des bei Tageslicht durchaus erwünschten hohen (und im wesentlichen wellenlängenunabhängigen) Reflexionsgrades bei Nachtfahrten zur Blendung des Fahrers durch die Scheinwerfer nachfolgender Fahrzeuge.

Andererseits sind blendfreie Rückblickspiegel bekannt (DE-AS 10 36 672; DE-AS 24 49 763), bei denen auf der Vorderseite des vorzugsweise aus Glas bestehenden transparenten Schichtträgers ein Belag in Form einer nichtmetallischen, vorzugsweise metalloxidischen Interferenzbeschichtung aufgebracht und die Rückseite gegebenenfalls mit einem dunklen, absorbierenden Überzug versehen ist. Die Interferenzbeschichtung kann dabei beispielsweise aus drei Teilschichten in der Reihenfolge hochbrechende Schicht - niedrigbrechende Schicht - hochbrechende Schicht bestehen. Werden die Dicken dieser Teilschichten als λ/4-Schichten auf das kurzwellige sichtbare Spektralgebiet eingestellt, so weisen derartige Spiegel im blauen Spektralbereich im Vergleich zum langwelligen Gelb-Rot-Bereich ein höheres Reflexionsvermögen auf. Durch einen solchermaßen selektiv reflektierenden Blaubelag wird bei Tageslicht noch ein ausreichend helles Bild erzeugt, während bei Nachtfahrten der Blendeffekt durch die Scheinwerfer nachfolgender Fahrzeuge mit ihrem hohen Strahlungsanteil im langwelligen sichtbaren Gebiet reduziert wird.

Ein Nachteil derartiger blendfreier Rückblickspiegel mit Vorderseiten-Interferenzbeschichtung besteht aber darin, daß die Beschichtung unmittelbar der Außenatmosphäre ausgesetzt ist. Insbesondere kann es bei Entfernung von Verschmutzungen von der beschichteten Vorderseite des Rückblickspiegels leicht zu Verkratzungen der Beschichtung kommen, welche die Funktionsweise eines derartigen Rückblickspiegels in besonderem Maße stören, weil Verkratzungen an einer hochreflektierenden Schicht wesentlich stärkere optische Störungen hervorrufen als beispielsweise an der Grenzfläche einer normalen Glasscheibe zu Luft mit einem Reflexionsvermögen von nur 4 %.

Der Weg, durch rückseitige Anordnung der Beschichtung auf dem Schichtträger den notwendigen Schutz der Beschichtung zu erreichen, kann bei den vorgenannten nicht-metallischen Interferenzbeschichtungen nicht beschritten werden; sie sind transparent und müßten auf ihrer Rückseite durch einen dunklen Überzug abgedeckt werden. Hierdurch würde jedoch die für die Wirkung des Interferenzfilters wichtige äußere Grenzfläche Interferenzbeschichtung/Luft ausgeschaltet, wodurch die Funktion des Filters störend beeinträchtigt würde.

Versucht man andererseits bei einem gattungsgemäßen Spiegel mit rückseitiger Reflexionsschicht aus Aluminium oder aber auch Silber sowie zwischen Schichtträger und Reflexionsschicht angeordneter dielektrischer Interferenzschicht die vorstehend beschriebene Selektivität in der Reflexion dadurch zu erzielen, daß die Interferenzschicht als auf das langwellige, sichtbare Gebiet angepaßte hochbrechende Entspiegelungsschicht, beispielsweise aus $TiO_2$, $CeO_2$, $Ta_2O_5$, $Bi_2O_3$ und/oder ZnS, ausgebildet wird, so führt dies zu einem allenfalls schwach blaustichigen Spiegel ohne nennenswerte Blendschutzwirkung.

Der Erfindung liegt daher die Aufgabe zugrunde, einen blendfreien Rückblickspiegel für Fahrzeuge, insbesondere Kraftfahrzeuge, zu schaffen, der unter Vermeidung der Nachteile der bekannten Rückblickspiegel mit Vorderseiten-Interferenzbeschichtung einen Lichtreflexionsgrad im Bereich zwischen dem nach den Richtlinien der Europäischen Gemeinschaft erforderlichen Mindest-Lichtreflexionsgrad von 0,4 und etwa 0,6 aufweist.

Erfindungsgemäß wird diese Aufgabe bei einem Rückblickspiegel der gattungsgemäßen Art dadurch gelöst, daß die Interferenzschicht in ihrer Dicke als Entspiegelungsschicht für den langwelligen sichtbaren Spektralbereich ausgebildet ist; daß der Brechungsindex der Interferenzschicht $\geq$ 2,1 ist; und daß der Lichtreflexionsgrad des transparenten Schichtträgers mit der Reflexionsschicht allein, gemessen von der Vorderseite des transparenten Schichtträgers aus, im Bereich zwischen 0,6 und 0,8 liegt.

Durch die erfindungsgemäß vorgenommene Materialauswahl für die Entspiegelungsschicht einerseits und die Reflexionsschicht andererseits gelingt es überraschenderweise, die obengenannten Forderungen an dem zu schaffenden Rückblickspiegel gleichzeitig optimal zu lösen.

Eine bevorzugte Ausführungsform der Erfindung sieht vor, daß der Lichtreflexionsgrad des transparenten Schichtträgers mit der Reflexionsschicht allein, gemessen von der Vorderseite des transparenten Schichtträgers aus, im Bereich zwischen 0,65 und 0,75 liegt.

Erfindungsgemäß kann weiterhin vorgesehen sein, daß die Reflexionsschicht aus Zink besteht.

Alternativ hierzu schlägt die Erfindung vor, daß die Reflexionsschicht aus Zinn besteht.

Auch kann erfindungsgemäß vorgesehen sein, daß die Reflexionsschicht aus einer Aluminium-Kupfer-Legierung besteht.

Die Erfindung sieht weiterhin alternativ hierzu gegebenenfalls vor, daß die Reflexionsschicht aus einer Zinn-Kupfer-Legierung besteht.

Eine weitere Ausführungsform der Erfindung ist gekennzeichnet durch eine derartige Dicke der Reflexionsschicht, daß die Transmission des mit der Entspiegelungsschicht und der Reflexionsschicht versehenen transparenten Schichtträgers < 3 % ist.

Die vorzugsweise verwendeten Materialien für die als Entspiegelungsschicht ausgebildete dielektrische Interferenzschicht umfassen TiO$_2$, ZnS, CeO$_2$, Bi$_2$O$_3$ und Ta$_2$O$_5$.

Es kann erfindungsgemäß vorgesehen sein, daß im Anschluß an die Reflexionsschicht eine Schutzschicht angeordnet ist.

Die Erfindung schlägt schließlich auch vor, daß zumindest eine der Schichten der rückseitigen Beschichtung durch Vakuum-Beschichtung aufgebracht ist.

Die Beschichtung des transparenten Schichtträgers zur Herstellung der erfindungsgemäßen Beschichtung erfolgt in aller Regel insgesamt durch Vakuum-Beschichtung. Vorzugsweise können die Metall- bzw. Metallegierungsschichten dabei durch Verdampfen aus widerstandsgeheizten Verdampfervorrichtungen oder auch durch Elektronenstrahlverdampfung aufgebracht werden. Ferner eignen sich Kathodenzerstäubung als Gleichstrom-, Niederfrequenz- und Hochfrequenzzerstäubung sowie das besonders wirtschaftliche Verfahren der MAGNETRON-Kathodenzerstäubung. Die dielektrischen Interferenzschichten können entweder durch direktes Verdampfen oder Kathodenzerstäubung der entsprechenden, dielektrischen Materialien erfolgen. Auch die bekannten Verfahren der reaktiven Verdampfung bzw. der reaktiven Kathodenzerstäubung der entsprechenden Metalle lassen sich einsetzen.

Neben der Vakuum-Abscheidung können ferner auch andere Abscheide-Verfahren, wie z. B. naßchemische Verfahren durch Abscheidung aus geeigneten Ausgangslösungen verwendet werden.

Als Schichtträger können neben Silikatglas auch andere transparente Materialien, vorzugsweise aus Kunststoff, wie z. B. Polymethylmethacrylate, Polyester, Polycarbonate und dergleichen, eingesetzt werden.

Innerhalb des Erfindungsgedankens kann ferner auch vorgesehen sein, zur Verbesserung der Korrosionsbeständigkeit des erfindungsgemäßen Rückblickspiegels, auf die

Beschichtung zusätzlich eine Schutzschicht aufzubringen. Das kann z. B. eine weitere Metall-, Metallegierungsschicht oder eine Metalloxidschicht sein, welche im Vakuum-Verfahren gleich anschließend nach Aufbringen der eigentlichen selektiven Beschichtung aufgebracht wird, oder auch ein Lacküberzug. Auch eine Kombination beider Maßnahmen ist vorgesehen.

Weitere Merkmale und Vorteile der Erfindung ergeben sich aus der nachfolgenden Beschreibung, in der Ausführungsbeispiele anhand der schematischen Zeichnung im einzelnen erläutert sind. Dabei zeigt:

Fig. 1 ein erstes Ausführungsbeispiel eines Rückblickspiegels nach der Erfindung im schematischen Schnitt senkrecht zur Ebene des transparenten Schichtträgers;

Fig. 2 ein zweites Ausführungsbeispiel eines Rückblickspiegels nach der Erfindung in Fig. 1 entsprechendem Schnitt; und

Fig. 3 graphische Darstellungen des Reflexionsgrades in Abhängigkeit von der Wellenlänge bei nach den Beispielen 1 bzw. 2 erhaltenen Rückblickspiegel.

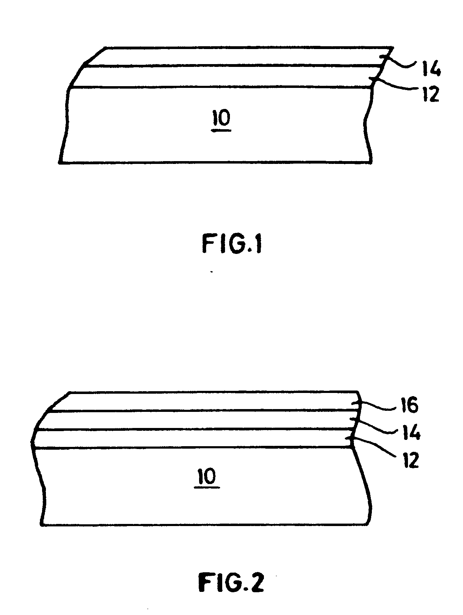

Fig. 1 zeigt ein Ausführungsbeispiel eines Rückblickspiegels nach der Erfindung, bei dem auf einem transparenten Schichtträger 10, aus Natron-Silikatglas bestehend, eine Entspiegelungsschicht 12 aus dielektrischem Material mit einem Brechungsindex $\geq$ 2,1 und daran anschließend eine Reflexionsschicht 14 aus einem Metall bzw. aus einer Metallegierung angeordnet sind.

Bei dem Ausführungsbeispiel von Fig. 2 ist im Anschluß an die Reflexionsschicht 14 noch eine Schutzschicht 16, in diesem Fall ein Lacküberzug, angeordnet.

Die Herstellung des erfindungsgemäßen Rückblickspiegels kann in der in den nachfolgenden Beispielen beschriebenen Weise erfolgen:

Beispiel 1:

Auf eine Klarglasscheibe 10 von 3 mm Dicke wurde in einer Hochvakuum-Bedampfungsanlage zunächst eine Zinksulfid-Entspiegelungsschicht 12 von 60 nm Schichtdicke aufgedampft. Anschließend wurde auf die Zinksulfidschicht 12 eine Zinkschicht 14 solcher Dicke aufgedampft, daß die Transmission der beschichteten Scheibe < 1 % war.

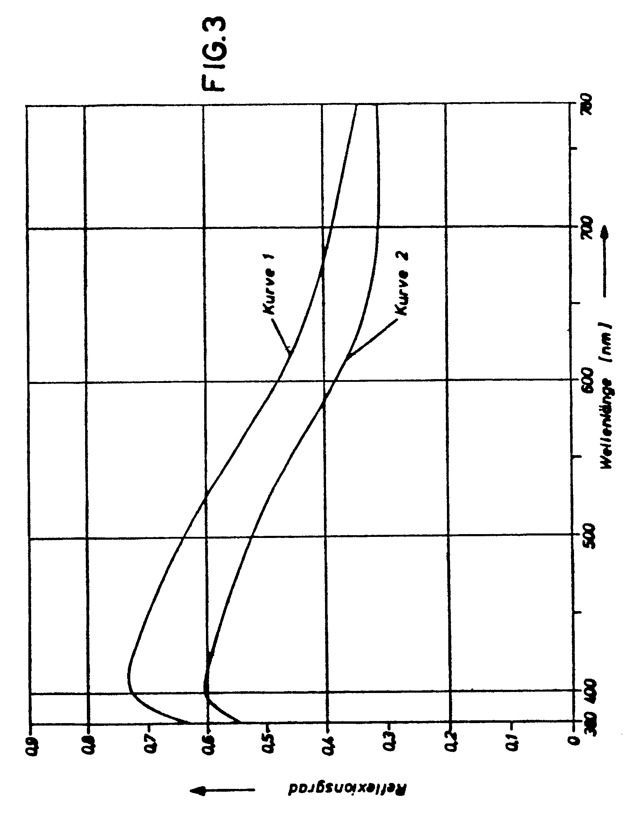

An der beschichteten Scheibe wurde anschließend der spektrale Reflexionsgrad für annähernd senkrechten Strahlungseinfall im sichtbaren Spektralgebiet von der Glasseite aus gemessen. Der gemessene Spektralverlauf ist als Kurve 1 in der beigefügten Fig. 3 wiedergegeben. Aus der Kurve 1 ist der für blendfreies Sehen erwünschte selektive Spektralverlauf mit kontinuierlicher Abnahme des Reflexionsgrades vom kurzwelligen zum langwelligen sichtbaren Gebiet ersichtlich. Dementsprechend weist die Scheibe einen visuell deutlich hervortretenden Blauton bei Betrachtung von der Glasseite auf. Auch das Helligkeitsniveau der Scheibe liegt im erwünschten mittleren Bereich. So beträgt der Lichtreflexionsgrad der Scheibe 0,56. Bei derartigen Lichtreflexionsgraden zwischen 0,5 und 0,6 sind insbesondere auch die Doppelbild-Effekte, die durch die etwas seitlich versetzte zusätzliche Reflexion an der Außenfläche des Spiegels hervorgerufen werden, nicht mehr von Bedeutung.

Beispiel 2:

Es wurde wie in Beispiel 1 verfahren, mit dem Unterschied, daß anstelle der Zinksulfid-Schicht eine Titandioxid-Entspiegelungsschicht 12 von 59 nm Dicke aufgebracht wurde. Anschließend erfolgte dann die Beschichtung mit einer Zinnschicht solcher Dicke, daß die Transmission der beschichteten Scheibe unterhalb von 1 % lag. Der spektrale Reflexionsverlauf, ebenfalls bei Messung von der Glasseite der Scheibe, ist als Kurve 2 in Fig. 3 wiedergegeben. Es zeigt sich ein ähnlicher selektiver Reflexionsverlauf wie bei der Beschichtung gemäß Beispiel 1. Lediglich das Helligkeitsniveau in der Reflexion ist etwas niedriger. Dementsprechend betrug der Lichtreflexionsgrad hier 0,45.

**Patentansprüche**

1. Rückblickspiegel für Fahrzeuge, insbesondere Kraftfahrzeuge oder dergleichen, mit einem transparenten Schichtträger (10), vorzugsweise aus Natron-Silikatglas bestehend, und einer rückseitigen Beschichtung (12,14), welche eine auf dem transparenten Schichtträger (10) angeordnete Interferenzschicht (12) aus dielektrischem Material und eine daran anschließende Reflexionsschicht (14) aus einem Metall oder einer Metallegierung aufweist, dadurch gekennzeichnet, daß die Interferenzschicht (12) in ihrer Dicke als Entspiegelungsschicht für den langwelligen sichtbaren Spektralbereich ausgebildet ist; daß der Brechungsindex der Interferenzschicht (12) $\geq 2,1$ ist; und daß der Lichtreflexionsgrad des transparenten Schichtträgers mit der Reflexionsschicht (14) allein, gemessen von der Vorderseite des transparenten Schichtträgers (10) aus, im Bereich zwischen 0,6 und 0,8 liegt.

2. Rückblickspiegel nach Anspruch 1, dadurch gekennzeichnet, daß der Lichtreflexionsgrad der Reflexionsschicht (14) allein, gemessen von der Vorderseite des transparenten Schichtträgers (10) aus, im Bereich zwischen 0,65 und 0,75 liegt.

3. Rückblickspiegel nach Anspruch 1 oder 2, dadurch gekennzeichnet, daß die Reflexionsschicht (14) aus Zink besteht.

4. Rückblickspiegel nach Anspruch 1 oder 2, dadurch gekennzeichnet, daß die Reflexionsschicht (14) aus Zinn besteht.

5. Rückblickspiegel nach Anspruch 1 oder 2, dadurch gekennzeichnet, daß die Reflexionsschicht (14) aus einer Aluminium-Kupfer-Legierung besteht.

6. Rückblickspiegel nach Anspruch 1 oder 2, dadurch gekennzeichnet, daß die Reflexionsschicht (14) aus einer Zinn-Kupfer-Legierung besteht.

7. Rückblickspiegel nach einem der vorangehenden Ansprüche, gekennzeichnet durch eine derartige Dicke der Reflexionsschicht (14), daß die Transmission des mit der Interferenzschicht (12) und der Reflexionsschicht (14) versehenen transparenten Schichtträgers (10) < 3% ist.

8. Rückblickspiegel nach einem der vorangehenden Ansprüche, dadurch gekennzeichnet, daß im Anschluß an die Reflexionsschicht (14) eine Schutzschicht (16) angeordnet ist.

9. Rückblickspiegel nach einem der vorangehenden Ansprüche, dadurch gekennzeichnet, daß zumindest eine der Schichten (12, 14, 16) der rückseitigen Beschichtung durch Vakuum-Beschichtung aufgebracht ist.

## Claims

1. A rear-view mirror for vehicles, more particularly motor vehicles or the like, comprising a transparent coating support or substrate (10), preferably consisting of soda silicate glass, and a rear coating (12, 14) which comprises a dielectric interference layer (12) disposed on the transparent substrate (10), followed by a reflecting layer (14) consisting of a metal or metal alloy, characterised in that the interference layer (12) is devised in its thickness as a non-reflecting layer for the visible long-wave range of the spectrum; in that the refractive index of the interference layer (12) is ≧ 2.1; and in that the degree of light reflection of the transparent substrate with the reflecting layer (14) alone is in the range of between 0.6 and 0.8, measured from the front of the transparent substrate (10).

2. A rear-view mirror according to claim 1, characterised in that the degree of light reflection of the reflecting layer (14) alone is in the range of between 0.65 and 0.75, measured from the front of the transparent substrate (10).

3. A rear-view mirror according to claim 1 or 2, characterised in that the reflecting layer (14) consists of zinc.

4. A rear-view mirror according to claim 1 or 2, characterised in that the reflecting layer (14) consists of tin.

5. A rear-view mirror according to claim 1 or 2, characterised in that the reflecting layer (14) consists of aluminium-copper alloy.

6. A rear view mirror according to claim 1 or 2, characterised in that the reflecting layer (14) consists of a tin-copper alloy.

7. A rear-view mirror according to any one of the preceding claims, characterised by a thickness of the reflecting layer (14) such that the transmission of the transparent substrate provided with the interference layer (12) and the reflecting layer (14) is < 3%.

8. A rear-view mirror according to any one of the preceding claims, characterized in that the reflecting layer (14) is followed by a protective layer (16).

9. A rear-view mirror according to any one of the preceding claims, characterised in that at least one of the layers (12, 14, 16) of the rear coating is applied by vacuum-coating.

## Revendications

1. Miroir rétroviseur pour véhicules, notamment véhicules automobiles ou similaires, comportant un support de couches transparent (10) constitué de préférence de verre au silicate de sodium, et un revêtement côté arrière (12, 14) qui comprend une couche d'interférence (12) en matériau diélectrique disposée sur le support de couches transparent (10) ainsi qu'une couche réfléchissante (14) qui lui fait suite et constituée de métal ou d'alliage métallique, caractérisé en ce que l'épaisseur de la couche d'interférence (12) est déterminée pour que cette couche soit une couche antireflet pour le domaine spectral visible de grande longueur d'onde, en ce que l'indice de réfraction de la couche d'interférence (12) est supérieur ou égal à 2,1 et en ce que le facteur de réflexion du support de couches transparent avec la couche réfléchissante (14) seule, mesuré du côté avant du support de couches transparent (10), est compris dans le domaine allant de 0,6 à 0,8.

2. Miroir rétroviseur selon la revendication 1, caractérisé en ce que le facteur de réflexion de la couche réfléchissante (14) seule, mesuré du côté avant du support de couches transparent (10), est compris dans le domaine allant de 0,65 à 0,75.

3. Miroir rétroviseur selon la revendication 1 ou 2, caractérisé en ce que la couche réfléchissante (14) est constituée de zinc.

4. Miroir rétroviseur selon la revendication 1 ou 2, caractérisé en ce que la couche réfléchissante (14) est constituée d'étain.

5. Miroir rétroviseur selon la revendication 1 ou 2, caractérisé en ce que la couche réfléchissante (14) est constituée d'un alliage aluminium/cuivre.

6. Miroir rétroviseur selon la revendication 1 ou 2, caractérisé en ce que la couche réfléchissante (14) est constituée d'un alliage étain/cuivre.

7. Miroir rétroviseur selon l'une des revendications précédentes, caractérisé en ce que la couche réfléchissante (14) a une épaisseur telle que la transmission du support de couches transparent (10) muni de la couche d'interférence (12) et de la couche réfléchissante (14) est inférieure à 3 %.

8. Miroir rétroviseur selon l'une des revendications précédentes, caractérisé en ce qu'une couche de protection (16) est disposée sur la couche réfléchissante (14).

9. Miroir rétroviseur selon l'une des revendications précédentes, caractérisé en ce qu'au moins l'une des couches (12, 14, 16) du revêtement côté arrière est déposée par revêtement sous vide.

FIG.1

FIG.2

FIG.3